# EUROPÄISCHE PATENTSCHRIFT

(11) **EP 1 365 872 B1**
(45) Veröffentlichungstag und Bekanntmachung des Hinweises auf die Patenterteilung: **02.11.2006**
(21) Anmeldenummer: 02806534.0
(22) Anmeldetag: 30.01.2002
(51) Int. Cl.: B22D 2/00, B22D 11/20, G01G 5/04, B22D 11/10

(54) **VERFAHREN UND EINRICHTUNG ZUM WÄGEN DES INHALTS EINES METALLURGISCHEN GEFÄSSES, INSBESONDERE DES INHALTS EINER VERTEILERRINNE IN STAHLSTRANGGIESSANLAGEN**
METHOD AND DEVICE FOR WEIGHING THE CONTENTS OF A METALLURGICAL VESSEL, PARTICULARLY THE CONTENTS OF A DISTRIBUTING LAUNDER IN STEEL CONTINUOUS CASTING INSTALLATIONS
PROCEDE ET DISPOSITIF DE PESAGE DU CONTENU D'UN RECIPIENT METALLURGIQUE, NOTAMMENT DU CONTENU D'UN CHENAL DISTRIBUTEUR DANS DES SYSTEMES DE COULEE CONTINUE D'ACIER

(30) Priorität: 09.03.2001 DE 10111294
(43) Veröffentlichungstag der Anmeldung: 03.12.2003
(73) Patentinhaber: SMS Demag Aktiengesellschaft, 40237 Düsseldorf (DE)
(72) Erfinder: WEYER, Axel, 42349 Wuppertal (DE); BOESE, Peter, 47443 Moers (DE); HECKEN, Hans, Jürgen, 53520 Schuld (DE)
(74) Vertreter: Valentin, Ekkehard
(86) Internationale Anmeldenummer: PCT/EP2002/000914
(87) Internationale Veröffentlichungsnummer: WO 2003/074212

(56) Entgegenhaltungen:
- AT-B- 367 330
- DE-A- 2 124 176
- DE-A- 2 924 825
- DE-A- 3 040 797
- DE-A- 3 915 093
- US-A- 3 587 760

## Beschreibung

Die Erfindung betrifft ein Verfahren zum Wägen eines metallurgischen Gefäßes, insbesondere einer Verteilerrinne in Stahlstranggießanlagen, wobei das Gefäß auf hydraulisch betätigbaren Wägeelementen aufgestützt wird. Die Erfindung betrifft weiterhin eine Einrichtung zum Wägen des Inhalts eines metallurgischen Gefäßes, nämlich des Inhalts einer Verteilerrinne in Stahlstranggießanlagen, wobei das Gefäß auf hydraulisch betätigbaren Wiegeelementen ruht,

Das Wägen der Verteilerrinne als Zwischenbehälter vor der Stranggießkokille in Stranggießanlagen dient zur Erfassung des aktuellen Füllstandes bzw. Füllgewichtes im Gießbetrieb. Der Füllstand bzw. das Füllgewicht wird als Prozesswert ständig beobachtet und zur Steuerung der Abläufe des Gießstarts und des kontinuierlichen Gießbetriebs, auch bei Sequenzguss, verwendet.

Ein solches Verfahren bzw. die zu dessen Ausübung übliche Einrichtung ist bekannt (AT-PS 367 330), wobei eine Kraftmesseinrichtung aus Kraftmessdosen zwischen das metallurgische Gefäß aufnehmenden, schwenkbaren Hebeln eines Pfannendrehturms innerhalb einer Stranggießanlage vorgesehen ist. Die hydraulischen Wägeelemente, die aus den Kraftmessdosen bestehen, sind zwischen der Lastaufnahmeeinrichtung und den Hebeln angeordnet. Diese Anordnung soll Reibungskräfte an der Schwenkachse und damit Messwertverfälschungen vermeiden. Die gewonnenen Messwerte können jedoch schon aufgrund der Eigenschaften der Kraftmessdosen nicht in allen Fällen reproduzierbar arbeiten.

Aus der DE 29 24 825 A1 ist eine Vorrichtung zur Feststellung des Ladegewichtes an LKW bekannt. Für diesen Zweck wird der Behälter (Ladefläche) auf hydraulische Zylinder aufgestützt und in einer hydraulischen Leitung des Systems wird eine Druckmessvorrichtung angeordnet.

Eine Aufnahme- und Wägevorrichtung für Gießpfannen (DE 43 44 367 A1) setzt einen Tragrahmen einer Transporteinrichtung voraus. Die Pfannenschlaufen liegen in einer Stützmulde auf Stützfüßen auf, diese stützen sich wiederum auf Auflagerflächen eines Wägebalkens von Wägeelementen ab. Hier treten Messwertverfälschungen schon durch an mehreren Stellen eintretende Reibungsverluste auf. Auch die zur Lastdämpfung vorgesehenen Dämpfungszylinder dienen nur zum sanften Aufsetzen der Gießpfanne und können kein Vorbild für eine genauere Messung sein.

Der Erfindung liegt die Aufgabe zugrunde, ein Verfahren und eine Vorrichtung für eine genaue Messung des Inhalts nicht nur zu Beginn eines metallurgischen Prozesses sondern auch während des Ablaufs eines Prozesses vorzuschlagen.

Die gestellte Aufgabe wird erfindungsgemäß dadurch gelöst, dass das jeweilige Füllgewicht über kontinuierlich gemessene Hydraulikdrücke in Zylinderkammern, die abzüglich des Leergewichts des Gefäßes und der Reibkräfte in den Zylinderkammern und / oder in vertikalen Führungen gemessen werden, rechnerisch bestimmt wird.

Dadurch wird der Inhalt des Gefäßes bei Beginn und während des metallurgischen Prozesses sehr genau gemessen. Außerdem ist es möglich, eine sehr große Anzahl von Parametern, die das Messergebnis verfälschen könnte, zu berücksichtigen.

Von Vorteil ist für den metallurgischen Prozess und damit für die Steuerung, dass die Hydraulikdrücke kontinuierlich gemessen werden.

Eine diesbezügliche Einbeziehung weiterer Parameter besteht darin, dass die Netto-Hydraulikdrücke in Kraftwerte entsprechend den geometrischen Zylinderabmessungen umgerechnet werden.

Eine solche Einbeziehung eines weiteren Parameters sieht vor, dass der Leergewichtswert des Gefäßes vor Beginn des Gießbetriebs als Basiswert (Nullwert) festgestellt und elektronisch abgespeichert wird.

Die Einrichtung zum Wägen des Inhalts eines metallurgischen Gefäßes, insbesondere des Inhalts einer Verteilerrinne in Stahlstranggießanlagen, wobei das Gefäß auf hydraulisch betätigbaren Wägeelementen ruht, löst die gestellte Aufgabe erfindungsgemäß derart, dass das kontinuierlich gemessene Füllgewicht über Hydraulikdrücke in Zylinderkammern mittels einer oder mehreren hydraulischen Kolben-Zylinder-Einheiten senkrecht und quer, frei von Kraftnebenschlüssen, abgestützt ist und dass an die Zylinderkammern Druckmesseinrichtungen angeschlossen sind. Dadurch sind die Grundlagen für das genaue Messergebnis geschaffen.

In einzelnen Fällen kann es auch vorteilhaft sein, dass die Druckmesseinrichtungen in den Zylinderkammern selbst angeordnet sind. Das Messergebnis kommt dabei aufgrund der Nähe zum Druckmedium besonders genau zustande.

Weitere Maßnahmen, um die Messgenauigkeit zu erhöhen, bestehen darin, dass das Gefäß mittels vier symmetrisch verteilten Kolben-Zylinder-Einheiten abgestützt ist.

Die Druckmessung kann auch dahingehend gestaltet sein, dass die Kolben-Zylinder-Einheiten über hydraulische Regelventile kontinuierlich auf eine vorgegebene Position parallel regelbar sind.

Vorteilhaft und die Wiederholbarkeit des genauen Messergebnisses in der Einrichtung zu unterstützen, ist außerdem, dass die Reibkräfte der Kolben-Zylinder-Einheiten als Reibkennlinien aufgenommen werden und elektronisch abgespeichert sind.

Eine solche Steigerung der Messgenauigkeit und der Wiederholbarkeit tritt außerdem dadurch ein, wenn das Leergewicht des Gefäßes mit entsprechenden Gewichtsanteilen der konstruktiven Tragevorrichtung elektronisch speicherbar ist.

In der Zeichnung ist ein Ausführungsbeispiel der Erfindung dargestellt und wird nachfolgend näher beschrieben.

Es zeigen:
- Fig. 1: einen senkrechten Schnitt durch eine Stranggießvorrichtung mit Gießpfanne, Verteilerrinne, Stranggießkokille, Strangführung und Gießstrang und
- Fig.2: eine Wäge-Einrichtung, anhand derer das Verfahren zum Wägen beschrieben wird.

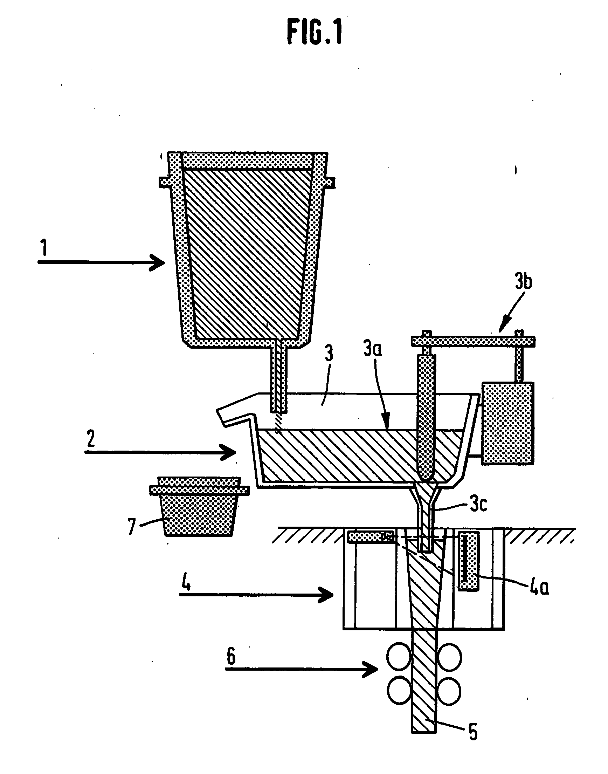

Das flüssige Metall, z.B. flüssiger Stahl, gelangt aus einer Pfanne 1 in ein metallurgisches Gefäß 2, das im dargestellten Beispiel aus einer Verteilerrinne 3 besteht, in der der flüssige Stahl mittels einer Füllstandsmesseinrichtung auf einem Füllstand 3a gehalten wird. Der flüssige Stahl strömt durch eine Stopfenregelung 3b und ein Tauchrohr 3c in eine Stranggießkokille 4, in der der Gießspiegel aufgrund einer Gießspiegelmesseinrichtung 4a geregelt wird. Der Gießstrang 5 wird sodann in einer Strangführung 6 abgezogen. Aus der Verteilerrinne 3 abgeschöpfte Restschlacke wird in einem Schlackekübel 7 aufgefangen (Fig. 1).

Das Verfahren zum Wägen eines metallurgischen Gefäßes, um Werte für das Gewicht der Schmelze zu erhalten, wird in der Verteilerrinne 3 selbst durchgeführt, wobei das Gefäß 2 auf hydraulisch betätigbaren Wägeelementen aufgestützt ist. Dabei bestehen diese Wägeelemente aus Kolben-Zylinder-Einheiten 8, 9, 10 und 11, die jeweils Zylinderkammern 8a, 9a, 10a und 11a aufweisen. Beim Wägen wird das Füllgewicht über Hydraulikdrücke in den Zylinderkammern 8a, 9a, 10a und 11a rechnerisch bestimmt, wobei die Hydraulikdrücke jeweils abzüglich des Leergewichtes des Gefäßes 2 und der Reibkräfte in den Zylinderkammern (8a; 9a; 10a; 11a) und / oder in vertikalen Führungen (12) gemessen werden. Die Hydraulikdrücke können kontinuierlich gemessen werden. Dabei kann auch derart vorgegangen werden, dass die Netto-Hydraulikdrücke in Kraftwerte entsprechend den geometrischen Zylinderabmessungen umgerechnet werden. Der Leergewichtswert des Gefäßes 2 kann vor Beginn des Gießbetriebs als Basiswert (Nullwert) festgestellt und elektronisch abgespeichert werden.

Aus den ermittelten Drücken pₐ bzw. Fₐ wird für jede Kolben-Zylinder-Einheit 9 bis 11 die Kraft Δ F1 bis Δ F4 gemessen bzw. errechnet und die Gesamtsumme F_{ges} gebildet. Damit liegt der momentane Inhalt der Verteilerrinne 3 fest.

Die Einrichtung für das beschriebene Wägeverfahren des metallurgischen Gefäßes 2, d.h. im Ausführungsbeispiel der Verteilerrinne 3, setzt hydraulisch betätigbare Wägeelemente voraus, auf denen das Gefäß 2 aufgestützt ist. Die Aufstützung erfolgt dahingehend, dass das Gefäß 2 mittels einer oder mehreren hydraulischen Kolben-Zylinder-Einheiten 8, 9, 10, 11 senkrecht und quer, frei von Kraftnebenschlüssen, abgestützt ist und dass an die Zylinderkammern 8a bis 11 a Druckmesseinrichtungen 13 angeschlossen sind.

In Ausnahmefällen sind die Druckmesseinrichtungen 13 in den Zylinderkammern 8a, 9a, 10a und 11a selbst angeordnet.

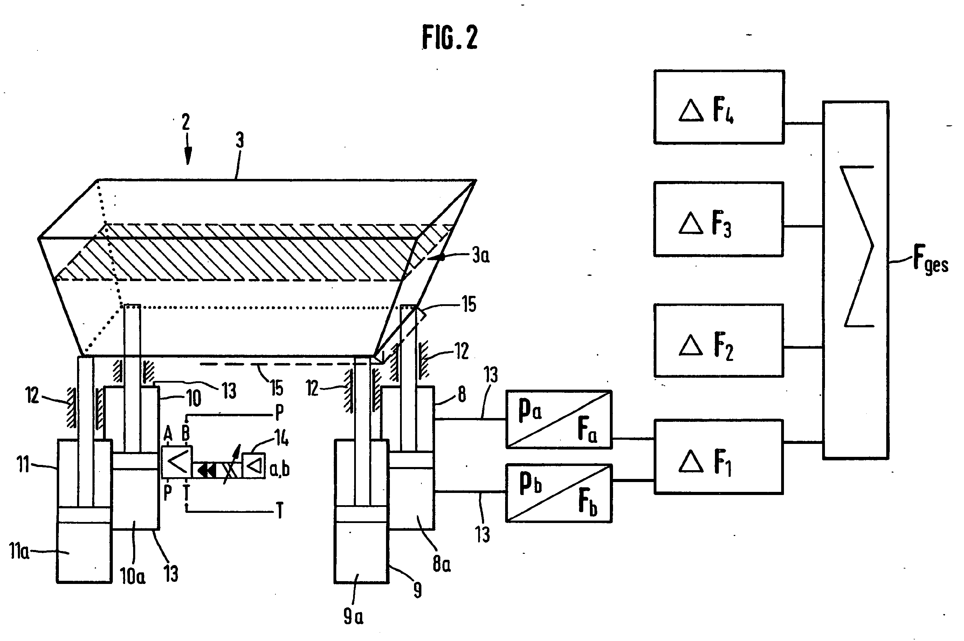

Im Ausführungsbeispiel ist das Gefäß 2 mittels vier symmetrisch verteilten Kolben-Zylinder-Einheiten 8, 9, 10, 11 abgestützt (Fig. 2). Dabei werden die Kolben-Zylinder-Einheiten 8, 9, 10 und 11 über hydraulische Regelventile 14 mit einem Vorlaufanschluss P und einer Rückführung T kontinuierlich auf eine vorgegebene Position parallel geregelt.

Die vertikalen Führungen 12, z.B. durch die Kolbenstangen bedingt, verursachen Reibkräfte. Diese Reibkräfte der Kolben-Zylinder-Einheiten 8, 9, 10 und 11 können als Reibkennlinien aufgenommen und elektronisch abgespeichert werden. Das Leergewicht des Gefäßes 2 kann auch mit entsprechenden Gewichtsanteilen der konstruktiven Tragevorrichtung 15 elektronisch abgespeichert und bei der Berechnung des Füllgewichtes berücksichtigt werden.

Die Vorgehensweise und die Einrichtung können auch auf andere metallurgische Gefäße unter den beschriebenen Verhältnissen eingesetzt werden.

### Bezugszeichenliste

- 1: Pfanne
- 2: metallurgisches Gefäß
- 3: Verteilerrinne
- 3a: Füllstandsmesseinrichtung
- 3b: Stopfenregelung
- 3c: Tauchrohr
- 4: Stranggießkokille
- 4a: Gießspiegelmesseinrichtung
- 5: Gießstrang
- 6: Strangführung
- 7: Schlackekübel
- 8: Kolben-Zylinder-Einheit
- 8a: Zylinderkammer
- 9: Kolben-Zylinder-Einheit
- 9a: Zylinderkammer
- 10: Kolben-Zylinder-Einheit
- 10a: Zylinderkammer
- 11: Kolben-Zylinder-Einheit
- 11a: Zylinderkammer
- 12: vertikale Führung
- 13: Druckmesseinrichtung
- 14: hydraulisches Regelventil
- 15: Tragevorrichtung

## Patentansprüche

1. Verfahren zum Wägen eines metallurgischen Gefäßes (2), insbesondere einer Verteilerrinne (3) in Stahlstranggießanlagen, wobei das Gefäß (2) auf hydraulisch betätigbaren Wiegeelementen aufgestützt wird,
**dadurch gekennzeichnet,**
**dass** das jeweilige Füllgewicht über kontinuierlich gemessene Hydraulikdrücke in Zylinderkammern (8a;. 9a; 10a; 11a), die abzüglich des Leergewichts des Gefäßes (2) und der Reibkräfte in den Zylinderkammern (8a; 9a; 19a; 11a) und / oder in vertikalen Führungen (12) gemessen werden, rechnerisch bestimmt wird.

2. Verfahren nach.Anspruch 1,
**dadurch gekennzeichnet,**
**dass** die Netto-Hydraulikdrücke in Kraftwerte entsprechend den geometrischen Zylinderabmessungen umgerechnet werden.

3. Verfahren nach einem der Ansprüche 1 oder 2,
**dadurch gekennzeichnet,**
**dass** der Leergewichtswert des Gefäßes (2) vor Beginn des Gießbetriebs als Basiswert (Nullwert) festgestellt und elektronisch abgespeichert wird.

4. Einrichtung zum Wägen des Inhalts eines metallurgischen Gefäßes (2), nämlich des Inhalts einer Verteilerrinne (3) in Stahlstranggießanlagen, wobei das Gefäß (2) auf hydraulisch betätigbaren Wiegeelementen ruht,
**dadurch gekennzeichnet,**
**dass** das kontinuierlich gemessene Füllgewicht über Hydraulikdrücke in Zylinderkammern mittels einer oder mehreren hydraulischen Kolben-Zylinder-Einheiten (8, 9, 10, 11) senkrecht und quer, frei von Kraftnebenschlüssen, abgestützt ist und dass an die Zylinderkammern (8a; 9a; 10a; 11a) Druckmesseinrichtungen angeschlossen sind.

5. Einrichtung nach Anspruch 4,
**dadurch gekennzeichnet,**
**dass** die Druckmesseinrichtungen (13) in den Zylinderkammern (8a, 9a, 10a, 11a) selbst angeordnet sind.

6. Einrichtung nach einem der Ansprüche 4 oder 5,
**dadurch gekennzeichnet,**
**dass** das Gefäß (2) mittels vier symmetrisch verteilten Kolben-Zylinder-Einheiten (8, 9, 10, 11) abgestützt ist.

7. Einrichtung nach einem der Ansprüche 4 bis 6,
**dadurch gekennzeichnet,**
**dass** die Kolben-Zylinder-Einheiten (8, 9, 10, 11) über hydraulische Regelventile (14) kontinuierlich auf eine vorgegebene Position parallel regelbar sind.

8. Einrichtung nach einem der Ansprüche 4 bis 7,
**dadurch gekennzeichnet,**
**dass** die Reibkräfte der Kalben-Zylinder-Einheiten (8, 9, 10, 11) als Reibkennlinien aufgenommen werden und elektronisch abgespeichert sind.

9. Einrichtung nach einem der Ansprüche 4 bis 8,
**dadurch gekennzeichnet,**
**dass** das Leergewicht des Gefäßes (2) mit entsprechenden Gewichtsanteilen der konstruktiven Tragevorrichtung (15) elektronisch speicherbar ist.

## Claims

1. Method of weighing a metallurgical vessel (2), particularly a distributor channel (3), in steel continuous casting plants, wherein the vessel (2) is supported on hydraulically actuable weighing elements, **characterised in that** the respective net weight is determined by computer by way of continuously measured hydraulic pressures in cylinder chambers (8a; 9a; 10a; 11 a), which are measured less the empty weight of the vessel (2) and the frictional forces in the cylinder chambers (8a; 9a; 10a; 11a) and/or in vertical guides (12).

2. Method according to claim 1, **characterised in that** the net hydraulic pressures are converted into force values in correspondence with the geometric cylinder dimensions.

3. Method according to one of claims 1 and 2, **characterised in that** the empty weight value of the vessel (2) is established prior to the start of the casting operation as a basic value (zero value) and electronically stored.

4. Equipment for weighing the content of a metallurgical vessel (2), namely the content of a distributor channel (3), in steel continuous casting plants, wherein the vessel (2) rests on hydraulically actuable weighing elements, **characterised in that** the continuously measured net weight is supported perpendicularly and transversely, free of force bypasses, by way of hydraulic pressures in cylinder chambers by means of one or more hydraulic piston-cylinder units (8, 9, 10, 11) and that pressure measuring devices are connected with the cylinder chambers (8a; 9a; 10a; 11 a).

5. Equipment according to claim 4, **characterised in that** the pressure measuring devices (13) are arranged in the cylinder chambers (8a, 9a, 10a, 11 a) themselves.

6. Equipment according to one of claims 4 and 5, **characterised in that** the vessel (2) is supported by means of four symmetrically distributed piston-cylinder units (8, 9, 10, 11).

7. Equipment according to one of claims 4 to 6, **characterised in that** the piston-cylinder units (8, 9, 10, 11) can be continuously regulated in parallel to a predetermined position by way of hydraulic regulating valves (14).

8. Equipment according to one of claims 4 to 7, **characterised in that** the friction forces of the piston-cylinder units (8, 9, 10, 11) are recorded as friction characteristic value curves and are electronically stored.

9. Equipment according to one of claims 4 to 8, **characterised in that** the empty weight of the vessel (2) can be electronically stored together with corresponding weight proportions of the constructional support device (15).

## Revendications

1. Procédé de pesage d'une cuve métallurgique (2), notamment d'un répartiteur (3) dans les installations de coulée continue, dans lequel la cuve (2) est appuyée sur des éléments de pesage actionnables par système hydraulique,
**caractérisé en ce que**
le poids de remplissage respectif est déterminé par calcul à l'aide des pressions hydrauliques mesurées en continu dans des chambres de vérins (8a ; 9a ; 10a ; 11a) qui sont mesurées en soustrayant le poids à vide de la cuve (2) et les forces de frottement dans les chambres de vérins (8a ; 8a ; 10a ; 11 a) et/ou dans des guides verticaux (12).

2. Procédé selon la revendication 1,
**caractérisé en ce que**
les pressions hydrauliques nettes sont converties en valeurs de force en fonction des dimensions géométriques des vérins.

3. Procédé selon une des revendications 1 ou 2,
**caractérisé en ce que**
la valeur de poids à vide de la cuve (2) est relevée avant le début de l'activité de coulée en tant que valeur de base (valeur zéro) et sauvegardée par voie électronique.

4. Procédé de pesage du contenu d'une cuve métallurgique (2), à savoir du contenu d'un répartiteur (3) dans les installations de coulée continue, dans lequel la cuve (2) repose sur des éléments de pesage actionnables par système hydraulique,
**caractérisé en ce que**
le poids de remplissage mesuré en continu s'appuie sur pressions hydrauliques dans des chambres de vérins au moyen d'une ou plusieurs unités hydrauliques piston-vérin (8, 9, 10, 11) perpendiculairement et transversalement sans dérivations de force et qu'aux chambres de vérins (8a ; 9a ; 10a; 11 a) sont raccordés des dispositifs de mesure de pression.

5. Dispositif selon la revendication 4,
**caractérisé en ce que**
les dispositifs de mesure de pression (13) sont disposés dans les chambres de vérins (8a, 9a, 10a, 11a) mêmes.

6. Dispositif selon une des revendications 4 ou 5,
**caractérisé en ce que**
la cuve (2) s'appuie au moyen de quatre plusieurs unités piston-vérin (8, 9, 10, 11) réparties symétriquement.

7. Dispositif selon une des revendications 4 à 6,
**caractérisé en ce que**
les unités piston-vérin (8, 9, 10, 11) sont réglables en continu parallèlement à l'aide de soupapes hydrauliques de réglage (14) vers une position prescrite.

8. Dispositif selon une des revendications 4 à 7,
**caractérisé en ce que**
les forces de frottement des unités piston-vérin (8, 9, 10, 11) sont relevées en tant que caractéristiques de frottement et sauvegardées par voie électronique.

9. Dispositif selon une des revendications 4 à 8,
**caractérisé en ce que**
le poids à vide de la cuve (2) peut être sauvegardé par voie électronique avec les composantes de poids correspondantes du dispositif porteur de la construction (15).
